# DEMANDE DE BREVET EUROPEEN

(11) **EP 1 383 047 A1**
(43) Date de publication de la demande: **21.01.2004**
(21) Numéro de dépôt: 02291812.2
(22) Date de dépôt: 18.07.2002
(51) Int. Cl.: G06F 11/00, G07F 7/10, G06F 1/00

(54) **Procédé de sécurisation de l'exécution d'un programme contre des attaques par rayonnement ou autres**

(71) Demandeur: CP8, 78431 Louveciennes Cedex (FR)
(72) Inventeur: Giraud, Nicolas, 78150 Le Chesnay (FR)

(57) **Abrégé**

Le procédé selon la présente invention concerne un procédé de sécurisation de l'exécution d'un programme dans un ensemble électronique comportant des moyens de traitement de l'information et des moyens de mémorisation d'informations. Le procédé consiste à contrôler le temps d'exécution d'au moins une séquence dudit programme par rapport au temps d'exécution normal prédéterminé de ladite séquence.

La présente invention concerne également le module électronique dans lequel ledit procédé est implémenté et la carte comprenant ledit module.

## Description

La présente invention concerne un procédé et un dispositif de sécurisation d'un ensemble électronique mettant en oeuvre un programme à protéger. Plus précisément, le procédé vise à proposer une parade aux attaques par rayonnement, flash, lumière ou autres ou plus généralement à toute attaque perturbant l'exécution des instructions du programme.

### DOMAINE TECHNIQUE

Lors de l'exécution d'un programme, les attaques par rayonnement ont pour conséquence de modifier les codes d'instructions exécutés par le processeur. Les instructions du programme sont remplacées par des instructions inopérantes. De ce fait, il en résulte une inexécution ou une exécution irrégulière de certaines parties du code, par exemple l'exécution d'instructions inopérantes au lieu et place d'une séquence de traitement sécuritaire.

Le présent demandeur a déposé une demande de brevet français n°0016724 le 21 décembre 2000 portant sur un procédé de sécurisation de l'exécution d'un programme implanté dans un module électronique à microprocesseur, ainsi que le module électronique et la carte à microcircuit associés. L'art antérieur décrit dans ladite demande est applicable à la présente invention. La solution protégée dans ladite demande consiste à déclencher par intermittence des interruptions et dérouter ainsi l'exécution du programme pour parer à des attaques éventuelles. Cette solution permet de détecter et d'empêcher les attaques par rayonnement avec une bonne probabilité. Cependant, certaines attaques peuvent ne pas être révélées, en particulier si l'attaque a lieu brièvement entre deux interruptions.

Un but de la présente invention est de proposer une protection efficace même pour des attaques très courtes.

Un autre but de la présente invention est de proposer une solution susceptible d'être implémentée dans les composants actuels sans adaptation, peu consommatrice en ressources et ne diminuant pas les performances de l'ensemble dans lequel elle est implémentée.

### RESUME DE L'INVENTION

La présente invention concerne un procédé de sécurisation de l'exécution d'un programme dans un ensemble électronique comportant des moyens de traitement de l'information et des moyens de mémorisation d'informations caractérisé en ce qu'il consiste à contrôler le temps d'exécution d'au moins une séquence dudit programme par rapport au temps d'exécution normal prédéterminé de ladite séquence.

La présente invention concerne également un module électronique dans lequel ledit procédé est implémenté, une carte comprenant ledit module, un programme permettant d'implémenter ledit procédé.

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :
- la figure 1 montre une représentation schématique d'un mode de réalisation d'un module électronique selon la présente invention ;
- la figure 2 montre une représentation schématique d'une partie du module selon la figure 1 dans laquelle les étapes du procédé selon la présente invention ont été mises en évidence.

### MANIERE DE REALISER L'INVENTION

Le procédé selon l'invention vise à sécuriser un ensemble électronique, et par exemple un système embarqué tel qu'une carte à puce mettant en oeuvre un programme. L'ensemble électronique comprend au moins un processeur et une mémoire. Le programme à sécuriser est installé dans la mémoire, par exemple de type ROM dudit ensemble.

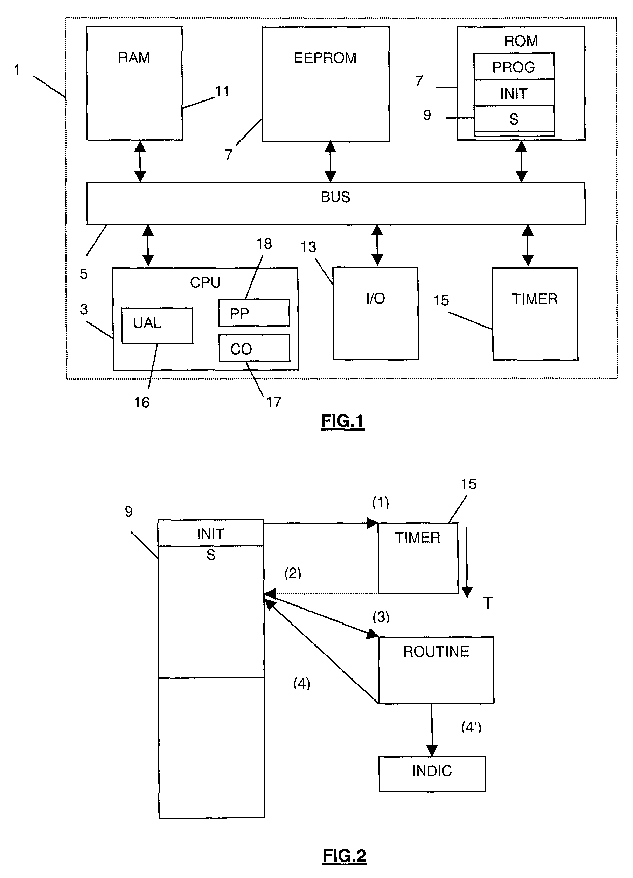

A titre d'exemple non limitatif, l'ensemble électronique décrit dans ce qui suit correspond à un système embarqué comprenant un module électronique 1 illustré sur la figure 1. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou autre utilisable dans divers domaines.

Le module électronique 1 à microprocesseur comprend un microprocesseur CPU 3 relié de façon bidirectionnelle par un bus 5 interne à une mémoire 7 non volatile de type ROM, EEPROM, Flash, FeRam ou autre contenant le programme PROG 9 à exécuter, une mémoire 11 vive de type RAM, des moyens 13 I/O d'entrée/sortie pour communiquer avec l'extérieur, et des moyens 15 d'évaluation du temps d'exécution du programme TIMER tel qu'un compteur avec déclenchement d'interruption à l'expiration. Une exception est levée lorsque le compteur 15 arrive à expiration. L'exception est suivie du déroutage de code programme vers une routine de traitement d'interruption (ROUTINE - figure 2).

De façon classique, l'unité centrale du microprocesseur CPU 3 illustré à la figure 1 comporte notamment une unité arithmétique et logique UAL 16, un registre compteur de programme (ou compteur ordinal) CO 17 donnant l'adresse de la prochaine instruction à exécuter, un registre pointeur de pile PP 18 donnant l'adresse mémoire du sommet de la pile d'exécution.

Sur des composants de type CISC (Complex Instruction Set Computer - ordinateur avec jeu d'instructions complexes) pour carte à puce, le temps d'exécution d'une séquence d'instructions est la somme des temps d'exécution de chaque instruction exécutée. Le temps d'exécution d'une instruction varie en général entre 2 et 11 cycles d'horloge. L'exécution d'une séquence d'instructions se caractérise par le point de départ, le point d'arrivée et le chemin suivi susceptible de comprendre des boucles et des branchements.

L'attaque au rayonnement transforme toute instruction à temps d'exécution variable en une instruction inopérante à temps d'exécution déterminé telle que par exemple une instruction NOP (2 cycles d'horloge sur les cartes SLE66) ou une instruction BTJT (5 cycles d'horloge sur les cartes ST19). La séquence attaquée est transformée en une séquence « linéaire » consistant en l'exécution d'une suite d'instructions inopérantes avec incrémentation du compteur ordinal 17 CO sans boucle ni branchement. Le chemin suivi est donc modifié et le point d'arrivée à l'issue du temps normal d'exécution sera différent du point d'arrivée normal. Même dans le cas d'une attaque très courte, le temps d'exécution d'une séquence est légèrement modifiée et le point d'arrivée à l'issue du temps normal d'exécution est différent de celui prévu.

Le procédé selon l'invention consiste à contrôler le temps d'exécution d'au moins une séquence S du programme 9 par rapport à son temps d'exécution normal prédéterminé, invariable en l'absence de perturbations, et plus précisément à contrôler que l'exécution de la séquence S se trouve au point d'arrivée prévu à l'issue du temps T normal prédéterminé de l'exécution de ladite séquence. Le contrôle peut porter par exemple sur une ou plusieurs séquences d'instructions sensibles, à protéger plus particulièrement comme les algorithmes cryptographiques, les processus de sécurisation ou autres.

Comme le montre la figure 2 (étape (1)), le compteur TIMER 15 est enclenché au point de départ de l'exécution de la séquence S avec une valeur d'initialisation correspondant à la durée normale T d'exécution du traitement concerné. Un code d'initialisation INIT du compteur est ajouté avant le début de chaque séquence S à protéger.

La valeur d'initialisation est pré-déterminée au cours du développement et doit être constante : elle ne doit pas varier dans les conditions normales d'exécution. Aussi, les interruptions susceptibles d'intervenir au cours de l'exécution de l'interruption sont désactivées ainsi que les mécanismes visant à modifier la consommation au cours d'un traitement (variation du nombre de cycles des instructions ou introduction de cycles supplémentaires). Si la séquence S comporte des branchements, tous les chemins d'exécution doivent aboutir, à l'expiration de la durée d'exécution du traitement, au même point d'arrivée, à savoir à la même instruction et plus précisément à la même valeur du compteur CO 17. Il est donc nécessaire d'égaliser la durée d'exécution à travers chaque branchement en ajoutant des instructions sans effet comme par exemple des instructions NOP. De cette manière, le traitement présente une durée identique quelque soit le branchement. De même, si la séquence S comporte des boucles à durées d'exécution variable, il est nécessaire de rajouter des boucles de resynchronisation pour compenser les variations de manière que la durée d'exécution totale reste constante.

On initialise une variable accessible par la routine de traitement d'interruption du compteur avec la valeur du compteur CO 17 correspondant à la valeur attendue au point d'arrivée normal de la séquence S à protéger. A l'expiration du compteur 15 TIMER, une interruption est levée (étape (2), fig. 2). La valeur du compteur CO correspond au point d'arrivée effectif: cette valeur est sauvegardée à l'adresse donnée par le pointeur de pile PP 18 et l'exécution du code est déroutée vers la routine de traitement de l'interruption ROUTINE placée en ROM et/ou en EEPROM et/ou toute mémoire non volatile (étape (3)). La routine d'interruption ROUTINE lit la valeur du compteur CO à la fin du temps d'exécution normal sur la pile et vérifie qu'elle correspond à la valeur attendue passée par variable comme vu précédemment.

Si la séquence est parvenue au point d'arrivée prévu à l'issu du temps d'exécution normal, la routine de traitement d'interruption se termine et prévoit un retour normal au point de déroutage du programme (étape (4)): l'exécution du programme se poursuit normalement. Dans le cas contraire, une perturbation de l'exécution de la séquence S du programme est mise en évidence et une attaque par rayonnement est détectée. Des mesures diverses peuvent alors être prises comme par exemple l'interruption de l'exécution du programme, le positionnement d'un indicateur de fraude (INDIC - étape (4')) en mémoire non volatile 7 avertissant d'une attaque frauduleuse et permettant par exemple d'interdire tout fonctionnement ultérieur du système d'exploitation.

Pour garantir une efficacité maximale, il est préférable que le point d'arrivée ne soit atteint qu'une seule fois lors de l'exécution de la séquence. Si la séquence passe plusieurs fois par le point d'arrivée, il existe une probabilité que l'exécution de la séquence soit au point d'arrivée prévue lors de l'expiration du compteur mais pas réel compte-tenu de la multiplicité des passages par le point d'arrivée, même si une attaque par rayonnement a eu lieu et a modifié l'exécution de la séquence.

Dans le cas particulier des composants RISC (Reduced Instruction Set Computer - ordinateur à jeu d'instructions réduit), la plupart des instructions s'exécutent en un cycle d'horloge. Ainsi, si une attaque par rayonnement substitue à des instructions quelconques s'exécutant en un cycle d'horloge des instructions inopérantes s'exécutant également en un cycle d'horloge, elle ne modifie pas le temps d'exécution de la séquence et le point d'arrivée reste le même : l'attaque ne peut pas être détectée. Pour garantir la détection dans ce cas particulier, le procédé selon l'invention consiste à rajouter dans le code une ou plusieurs boucles courtes sans effet. Les boucles ajoutées augmentent le temps d'exécution normal de la séquence d'instructions à protéger. En cas d'attaque par rayonnement, les boucles disparaissent et la durée d'exécution de la séquence se trouve modifiée, ce qui permet de détecter l'attaque.

Le déclenchement du traitement à l'expiration du compteur repose sur un moyen matériel résistant aux attaques par rayonnement.

Il est à noter que l'exécution de la routine de traitement de l'interruption peut être perturbée par une attaque par rayonnement. Selon un développement de l'invention, le procédé selon la présente invention est renforcé en plaçant l'instruction de retour d'interruption au dernier emplacement de la mémoire ou juste avant une frontière de domaine partagé. Si une attaque par rayonnement empêche l'exécution de retour d'interruption, le compteur CO est incrémenté à l'emplacement mémoire suivant qui se trouve en dehors de la zone de mémoire programme autorisée. Il s'en suit une procédure spécifique au composant, à savoir par exemple sur le composant ST19, la génération d'une interruption non masquable (NMI) avec reset. Selon un autre développement supplémentaire de l'invention, une séquence de positionnement d'un indicateur de fraude est introduite en mémoire non volatile après l'instruction de retour d'interruption.

Par conséquent, le procédé selon la présente invention permet de détecter toute attaque par rayonnement quelque soit sa durée sur une séquence protégée. Ledit procédé est peu coûteux en ressources et en temps d'exécution. En effet, en ressources, le procédé nécessite uniquement un ajout de code d'initialisation du compteur, de la routine de gestion d'interruption de celui-ci, et éventuellement pour égaliser les branches d'exécution et resynchroniser les boucles. Le temps d'exécution consommé par le procédé selon l'invention pour chaque séquence d'instructions protégée correspond à l'initialisation du compteur, l'exécution de la routine de traitement d'interruption et le code éventuellement ajouté pour l'égalisation des branches et la re-synchronisation des boucles. Le procédé permet donc de protéger le code sans pénaliser les performances en taille de code et en temps d'exécution. Le procédé utilise un compteur avec interruption associée.

Par ailleurs, le choix d'un compteur avec déclenchement d'interruption à l'expiration est particulièrement intéressant à plusieurs titres. D'une part, il fait partie de l'équipement de base des modules électroniques à microprocesseur. D'autre part, il s'avère assez facile à mettre en oeuvre du point de vue programmation. Il constitue donc un moyen matériel très simple et très fiable pour provoquer une interruption sans intervention logicielle.

Le procédé selon l'invention permet également de proposer une parade à toute attaque modifiant d'une manière imprévisible une séquence d'instructions telle que l'attaque DFA (Differential Fault Analysis - par injection de fautes) ou autres (sauts intempestifs, modification ou perturbation de la logique associée au compteur de programme CO, transformation d'une instruction en une autre instruction).

## Revendications

1. Procédé de sécurisation de l'exécution d'un programme dans un ensemble électronique comportant des moyens de traitement de l'information et des moyens de mémorisation d'informations **caractérisé en ce qu'**il consiste à contrôler le temps d'exécution d'au moins une séquence dudit programme par rapport au temps d'exécution normal prédéterminé de ladite séquence.

2. Procédé selon la revendication 1, **caractérisé en ce qu'**il consiste à contrôler le temps d'exécution d'au moins une séquence dudit programme par rapport au temps d'exécution normal prédéterminé, invariable en l'absence de perturbations, de ladite séquence.

3. Procédé selon l'une des revendications 1 ou 2, **caractérisé en ce qu'**il consiste à contrôler le point d'arrivée de ladite séquence à l'expiration du temps d'exécution normal prédéterminé de ladite séquence.

4. Procédé selon l'une des revendications 1 à 3, **caractérisé en ce qu'**il consiste à déclencher au début de ladite séquence un compteur à interruption initialisé à la valeur du temps d'exécution normal prédéterminé de ladite séquence, à déclencher une interruption dans l'exécution du programme à l'expiration du compteur et à dérouter l'exécution dudit programme vers une routine de gestion de l'interruption permettant de contrôler le point d'arrivée de ladite séquence.

5. Procédé selon l'une des revendications précédentes, **caractérisé en ce que** si le temps d'exécution de ladite séquence n'est pas normal, la routine de gestion de l'interruption est immédiatement suivie d'une séquence de positionnement d'un indicateur de fraude en mémoire ou d'une interruption de l'exécution en cours par un autre moyen.

6. Procédé selon l'une des revendications précédentes, **caractérisé en ce qu'**il consiste à rajouter à ladite séquence des instructions ou des boucles ou équivalents de manière à égaliser le temps d'exécution de la séquence dans toutes ses branches ou de manière que le temps d'exécution de ladite séquence soit modifié en présence d'une attaque.

7. Procédé selon la revendication 4, **caractérisé en ce que** la routine de gestion de l'interruption est placée au dernier emplacement de la mémoire programme ou juste avant une frontière du domaine partagé de façon à sortir de la zone de mémoire programme autorisée si une attaque empêche l'exécution de retour d'interruption.

8. Module électronique comportant des moyens de traitement de l'information et des moyens de mémorisation d'informations contenant un programme à exécuter **caractérisé en ce qu'**il comporte des moyens permettant de contrôler le temps d'exécution d'au moins une séquence dudit programme par rapport au temps d'exécution normal prédéterminé de ladite séquence.

9. Module selon la revendication 8, **caractérisé en ce que** les moyens comprennent un compteur avec déclenchement d'interruption à l'expiration.

10. Carte **caractérisée en ce qu'**elle comprend le module électronique selon l'une des revendications 8 ou 9.

11. Programme d'ordinateur comprenant des instructions de code de programme pour l'exécution des étapes du procédé selon l'une des revendications 1 à 7 lorsque ledit programme est exécuté dans un système informatique.
